# EUROPÄISCHE PATENTSCHRIFT

(11) **EP 1 897 242 B1**
(45) Veröffentlichungstag und Bekanntmachung des Hinweises auf die Patenterteilung: **15.07.2015**
(21) Anmeldenummer: 06753960.1
(22) Anmeldetag: 30.05.2006
(51) Int. Cl.: H04B 5/00, G08C 17/04

(54) **SYSTEM ZUR BERÜHRUNGSLOSEN ENERGIEÜBERTRAGUNG**
SYSTEM FOR THE CONTACTLESS TRANSMISSION OF POWER
SYSTEME DE TRANSMISSION D'ENERGIE SANS CONTACTS

(30) Priorität: 23.06.2005 DE 102005029599
(43) Veröffentlichungstag der Anmeldung: 12.03.2008
(73) Patentinhaber: SEW-EURODRIVE GmbH & Co. KG, 76646 Bruchsal (DE)
(72) Erfinder: SIMON, Olaf, 76646 Bruchsal (DE); MAHLEIN, Jochen, 76139 Karlsruhe (DE); SCHNEIDER, Bernhard, 68794 Oberhausen-Rheinhausen (DE); SCHWESINGER, Klaus, 76646 Bruchsal (DE); PODBIELSKI, Leobald, 76199 Karlsruhe (DE); WEBER, Jochen, 68726 Plankstadt (DE)
(86) Internationale Anmeldenummer: PCT/EP2006/005124
(87) Internationale Veröffentlichungsnummer: WO 2006/136267

(56) Entgegenhaltungen:
- DE-A1- 3 402 351
- DE-A1- 4 125 143
- DE-C1- 19 601 511

## Beschreibung

Die Erfindung betrifft ein System zur berührungslosen Energieübertragung.

Aus der DE 34 02 351 sind zwei induktiv gekoppelte, gegeneinander drehbar angeordnete Wicklungen bekannt, die im gleichen axialen Bereich angeordnet sind und verschiedene Radien aufweisen. Die erste umgibt sozusagen die zweite. Allerdings ist die Konstruktion sehr aufwendig.

Aus der DE 41 25 143 A1 ist ebenfalls eine aufwendige und kostspielige Lösung mit zwei Wicklungen bekannt.

**Aus der** DE 196 01 511 C1 **ist eine zueinander fest angeordnete Primärwicklung und Sekundärwicklung bekannt.**

**Aus der** DE 34 02 351 A1 **ist ein System zur berührungslosen Energieübertragung bekannt.**

Der Erfindung liegt daher die Aufgabe zugrunde, ein System zur berührungslosen Energieübertragung weiterzubilden, wobei eine möglichst einfache, kostengünstige und gleichzeitig effektive Übertragung ausführbar sein soll.

Erfindungsgemäß wird die Aufgabe bei dem System nach den in Anspruch 1 oder 11 angegebenen Merkmalen gelöst.

Wesentliche Merkmale der Erfindung bei dem System sind, dass das System zur berührungslosen Energieübertragung vorgesehen ist, umfassend eine primärseitige und sekundärseitige, relativ zur primärseitigen Wicklung drehbar vorgesehene Wicklung,
wobei ein Spulenkern an der primärseitigen Wicklung vorgesehen und ausgeformt ist, dass dessen Schnittgebilde in zumindest einer Schnittebene, die die Drehachse enthält, U-förmig oder C-förmig um den Wicklungsbereich der primärseitigen Wicklung herum ausgeprägt ist.

Von Vorteil ist dabei, dass die Magnetfeldlinien durch den Kern leitbar sind und somit eine starke induktive Kopplung zwischen den Wicklungen vorsehbar ist. Somit ist ein resonanter Abnehmer verzichtbar. Es genügt eine normale transformatorische Übertragung. Außerdem sind derartige Spulenkern-Bauteile verwendbar, dass auf der Innenseite des Spulenkerns eine geschlossene Innenfläche des Spulenkerns erzeugbar ist. Somit ist der gesamte Fluss von innen außen herum um die Wicklung durch das C oder U herumleitbar. Bei Verwendung von C oder U, deren Schenkel und weiteres Teil stets dieselbe Querschnittsfläche aufweisen, ist sogar eine im Wesentlichen konstante Magnetflussdichte erzeugbar und somit eine optimale Materialausnutzung erreichbar.

Bei einer vorteilhaften Ausgestaltung existieren mehrere solche Schnittebenen, die zueinander um einen Drehwinkelbetrag um die Drehachse herum verdreht angeordnet sind, insbesondere um einen relativ zur nächst benachbarten Schnittebene jeweils gleichgroßen Betrag. Von Vorteil ist dabei, dass eine gewisse Anzahl von U oder C am Umfang der Wicklung angeordnet werden können und somit immer dieselben Bauteile verwendbar sind. Somit sind besonders kostengünstige Spulenkerne erzeugbar. Es muss also kein aufgeschnittener Torus oder Topf hergestellt werden.

Bei einer vorteilhaften Ausgestaltung ist ein Spulenkern an der primärseitigen Wicklung vorgesehen, dessen Schnittgebilde in jeder Schnittebene, die die Drehachse enthält, U-förmig oder C-förmig um den Wicklungsbereich der primärseitigen Wicklung herum ausgeprägt ist. Von Vorteil ist dabei, dass auch eine speziell geformter rotationsförmiger Topf, also ein Rotationskörper, verwendbar ist. Allerdings ist das Material dann nicht ganz optimal ausgenutzt, da am Außenumfang mehr Material als am Innenumfang vorgesehen ist. Vorteilig ist jedoch, dass die Herstellung schneller und einfacher in einer speziell gefertigten Form ausführbar ist.

Bei einer vorteilhaften Ausgestaltung ist der Spulenkern aus mehreren U-förmigen oder C-förmigen Teilen zusammengesetzt, die am Umfang der Wicklung angeordnet sind und deren Schenkel in einer Richtung orientiert sind, die parallel zur Drehachse orientiert ist. Von Vorteil ist dabei, dass in einfacher und kostengünstiger Weise der Spulenkern erzeugbar ist.

Bei einer vorteilhaften Ausgestaltung ist der Spulenkern an der primärseitigen Wicklung als im Wesentlichen topfförmig vorgesehen, wobei die Öffnung des Topfes zur sekundärseitigen Wicklung hin vorgesehen ist. Von Vorteil ist dabei, dass möglichst viel Magnetfluss abschirmbar ist.

Bei einer vorteilhaften Ausgestaltung ist der Spulenkern an der primärseitigen Wicklung als im Wesentlichen topfförmig vorgesehen, wobei zur sekundärseitigen Wicklung hin die Öffnung des Topfes vorgesehen ist. Von Vorteil ist dabei, dass sekundärseitig eine einfache Platte genügt als Deckel.

Bei einer vorteilhaften Ausgestaltung ist der Spulenkern an der sekundärseitigen und/oder primärseitigen Wicklung aus gleichartigen ausgeformten Teilen zusammengesetzt, insbesondere aus einer Vielzahl hiervon. Von Vorteil ist dabei, dass stets gleichartige Teile verwendbar sind und somit die Stückzahlen hoch und die Kosten pro Teil niedrig sind.

Bei einer vorteilhaften Ausgestaltung ist ein Spulenkern an der sekundärseitigen Wicklung vorgesehen, der eben ausgebildet ist. Von Vorteil ist dabei, dass der Spulenkern einfach und kostengünstig fertigbar ist. Außerdem fängt er die aus dem primärseitigen Spulenkern austretenden Magnetfeldlinien unabhängig von der Drehlage oder Drehgeschwindigkeit gleichmäßig ein.

Bei einer vorteilhaften Ausgestaltung ist ein Spulenkern an der sekundärseitigen Wicklung vorgesehen, der aus Quadern zusammengesetzt ist, die in einer Ebene angeordnet sind, deren Normalenrichtung parallel zur Drehachsenrichtung verläuft. Von Vorteil ist dabei, dass eine einfache Platte zur Befestigung der Quader ausreicht.

Wesentliche Merkmale sind bei dem System auch, dass eine primärseitige und sekundärseitige, relativ zur primärseitigen Wicklung drehbar vorgesehene Wicklung vorhanden ist,
wobei die primärseitige Wicklung mit einer mittelfrequenten Spannung versorgt ist,
wobei sekundärseitig ein Parallelschwingkreis vorgesehen ist, dessen Resonanzfrequenz auf die Mittelfrequenz abgestimmt ist. Von Vorteil ist dabei, dass

Bei einer vorteilhaften Ausgestaltung ist dem Parallelschwingkreis ein Gleichrichter nachgeschaltet, insbesondere zur Erzeugung von Zwischenkreisspannung für einen Umrichter. Von Vorteil ist dabei, dass dem Verbraucher eine von der entnommenen Leistung weitgehend unabhängig konstante Spannung zur Verfügung stellbar ist.

Bei einer vorteilhaften Ausgestaltung verläuft die mittelfrequente, die primärseitige Wicklung versorgende Spannung rechteckförmig, ist also eine mittelfrequente Rechteckspannung. Von Vorteil ist dabei, dass diese Spannung einfach und kostengünstig zu erzeugen ist, insbesondere unter Verwendung oder Umbau von Einspeisegeräten des Standes der Technik.

Bei einer vorteilhaften Ausgestaltung sind zur Datenübertragung zwischen primärem und sekundärem Teil höherfrequente Signale aufmoduliert. Von Vorteil ist dabei, dass keine weiteren Leitungen zu verlegen sind, sondern bei der Übertragung die vorhandenen Leitungen nutzbar sind.

Bei einer vorteilhaften Ausgestaltung ist zur Datenübertragung zwischen primärem und sekundärem Teil ein Leckwellenleiter, wie geschlitztes Koaxialkabel oder dergleichen, vorgesehen. Von Vorteil ist dabei, dass eine störungsfreie Übertragung ausführbar ist, also ein vorteiliges Signal-Rausch-Verhältnis vorhanden ist.

Weitere Vorteile ergeben sich aus den Unteransprüchen.

### Bezugszeichenliste

- 1: U-förmiger Kern
- 2: Wicklung
- 3: Abdeckung
- 4: Gehäuseteil
- 20: Ferritplatte
- 21: Gehäuseteil
- 22: Wicklung
- 23: Abdeckung
- 40: Gleichrichter
- 41: Einspeisung
- T: Drehübertrager
- L: Induktivität
- C: Kondensator

Die Erfindung wird nun anhand von Abbildungen näher erläutert:

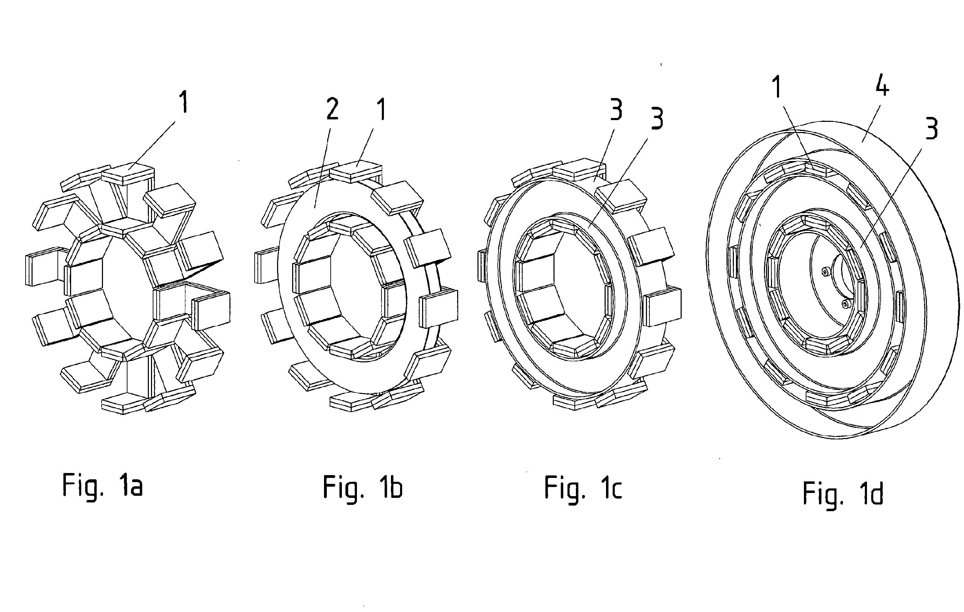

In den Figuren 1a bis 1d ist der Stator einer erfindungsgemäßen Vorrichtung gezeigt, wobei Figur 1 a nur die U-förmigen, am Umfang angeordneten Kerne zeigt, Figur 1 b zusätzlich die eingelegte Wicklung 2, Figur 1c zusätzlich die Abdeckung 3 für die Wicklung 2 und Figur 1d das Gehäuseteil 4 des Stators.

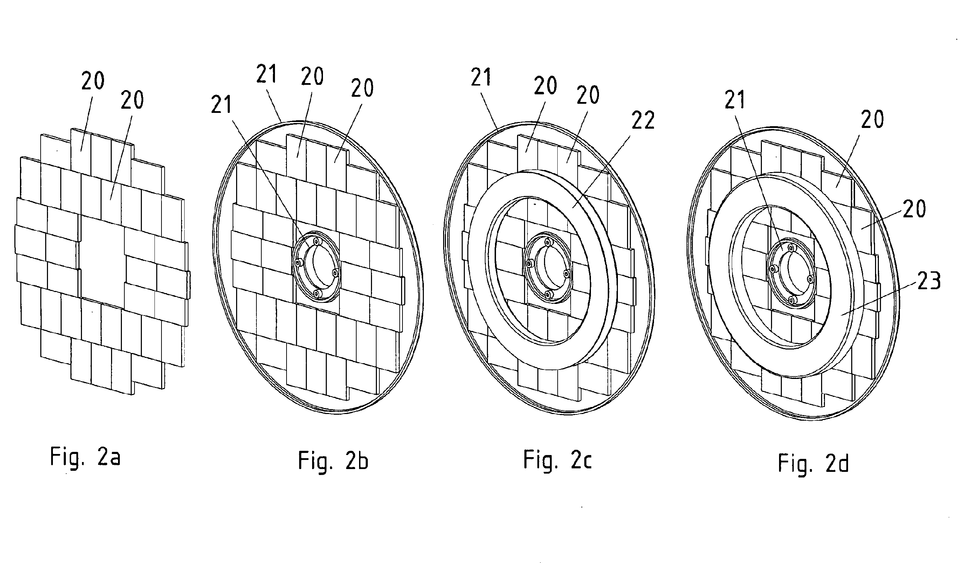

In den Figuren 2a bis 2d ist der Rotor einer erfindungsgemäßen Vorrichtung gezeigt, wobei Figur 2a nur die Ferritplatten 20, Figur 2b noch das Gehäuseteil 21 mit runder Ausnehmung um die Achse herum, Figur 2c noch zusätzlich die auf den Ferritplatten vorgesehene Wicklung 22 und Figur 2d zusätzlich noch die Abdeckung 23 der Wicklung.

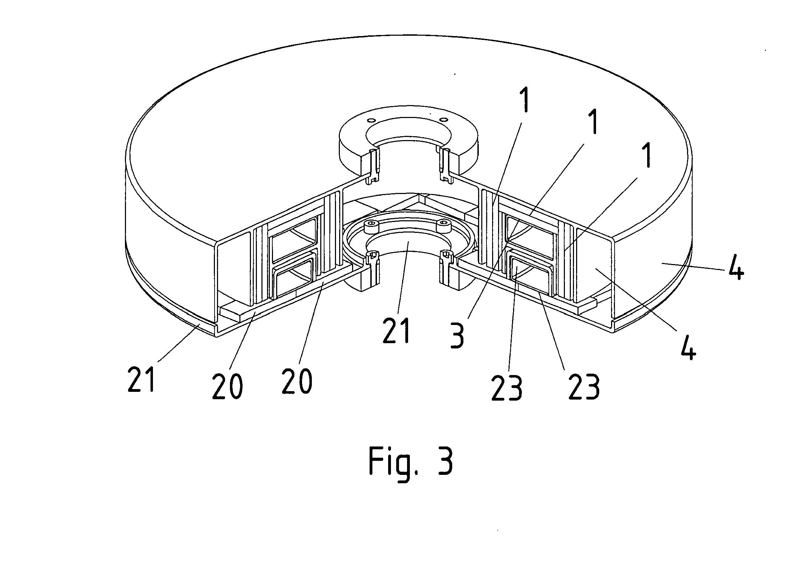

Figur 3 zeigt die zusammengebaute Vorrichtung. Dabei ist der Rotor relativ zum Stator drehbar vorgesehen. Während der Drehbewegung ist die induktive Kopplung im Wesentlichen konstant.

Vorteiligerweise sind die Ferritplatten 20 des Rotors einfach und kostengünstig herstellbare Bauteile. Ebenso sind die am Umfang des Stators angeordneten U-Kerne aus jeweils drei Ferritplatten herstellbar und somit einfach und kostengünstig.

Günstigerweise ist die Flussdichte im jeweiligen U-Kern im Wesentlichen konstant. Daher ist nicht zu viel Material verwendet, also das verwendete Material optimal ausgenutzt und die Masse der Vorrichtung insgesamt verringert. Da die Bauteile alle gleich sind, ist eine Kostenreduktion erreichbar.

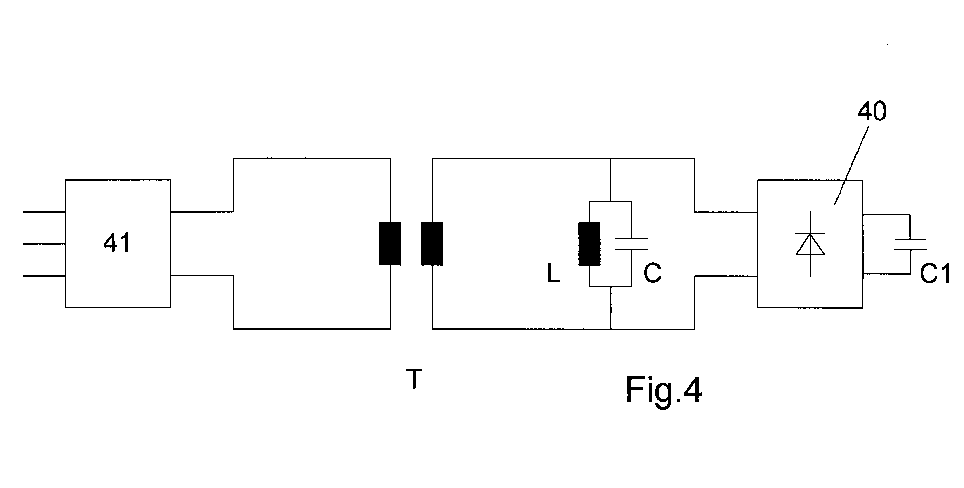

In Figur 4 ist die elektrische Beschaltung des Drehübertragers T gezeigt. Die drehstromversorgte Einspeisung 41 versorgt den Primärteil des Drehübertrager T, also die Statorwicklung, mit einer mittelfrequenten Spannung von 10 - 100 kHz, vorzugsweise 20 - 30 kHz. In einem weiteren erfindungsgemäßen Ausführungsbeispiel wurde 25kHz vorteilig verwendet. In einem weiteren erfindungsgemäßen Ausführungsbeispiel wurde die mittelfrequente Spannung rechteckförmig vorteilig ausgeführt, wodurch die ohmschen Verluste in den elektronischen Schaltern der Leistungsstufe der Einspeisung reduzierbar waren.

Bei dem Ausführungsbeispiel nach Figur 4 versorgt die sekundärseitige Wicklung einen Gleichrichter, dem ein L-C-Filter parallel vorgeschaltet ist. Das L-C-Filter ist derart dimensioniert, dass ein Schwingkreis vorliegt mit einer Resonanzfrequenz, welche der Mittelfrequenz entspricht.

Vorteil des L-C-Filter ist, dass die vom Gleichrichter 40 dem Verbraucher zugeführte Spannung möglichst wenig von der Verbraucherleistung abhängt. Somit ist die Gleichspannung für den Verbraucher weitestgehend konstant. Ohne L-C-Filter wäre dies deutlich schlechter.

Der Drehübertrager weist eine Kopplung auf, die vergleichbar ist mit der bei Transformatoren üblichen. Allerdings ist sie etwas schwächer, weil ein Luftspalt überbrückt werden muss.

In einem weiteren erfindungsgemäßen Ausführungsbeispiel wurde die Induktivität L des L-C-Filters weggelassen, wodurch zwar eine leichte Verschlechterung entstand, aber die Erfindung immer noch vorteilig ausführbar war, insbesondere zu geringeren Kosten.

In dem Ausführungsbeispiel nach Figur 4 ist dem Gleichrichter 40 nachgeordnet ein beispielhafter Zwischenkreiskondensator C1 eines Umrichters angeordnet, aus dem die Leistungsendstufe des Umrichters und somit dann auch ein verbundener Elektromotor versorgbar ist.

Statt Antrieben, umfassend Umrichter und Elektromotoren, sind aber auch andere Verbraucher versorgbar.

Wesentlich ist bei der Erfindung auch, dass Energie übertragen wird, also Leistungen von mehr als 1 kW übertragbar sind. Dies ist für industrielle Anwendungen von Bedeutung. Ermöglicht ist dies wesentlich durch den L-C-Filter. Dieser ermöglicht außerdem die berührungslose Energieübertragung über einen relativ großen Luftspalt, der in seinem Wert sogar schwankt beim Umdrehen.

Die notwendige Informationsübertragung zwischen drehendem Teil und stationärem ist entweder durch höherfrequente Aufmodulation über den Drehübertrager hinweg übertragbar oder durch andere Verfahren, wie elektromagnetische Wellen, insbesondere Funkwellen, Infrarot oder andere Wellenarten.

## Patentansprüche

1. System zur berührungslosen Energieübertragung,
umfassend eine primärseitige und sekundärseitige, relativ zur primärseitigen Wicklung drehbar vorgesehene Wicklung,
**dadurch gekennzeichnet, dass**
ein Spulenkern an der primärseitigen Wicklung vorgesehen und ausgeformt ist, dass dessen Schnittgebilde in zumindest einer Schnittebene, die die Drehachse enthält, U-förmig oder C-förmig um den Wicklungsbereich der primärseitigen Wicklung herum ausgeprägt ist,
**wobei ein Spulenkern an der sekundärseitigen Wicklung vorgesehen ist, der aus Quadern zusammengesetzt ist, die in einer Ebene angeordnet sind, deren Normalenrichtung parallel zur Drehachsenrichtung verläuft.**

2. System nach Anspruch 1,
**dadurch gekennzeichnet, dass**
mehrere solche Schnittebenen existieren, die zueinander um einen Drehwinkelbetrag um die Drehachse herum verdreht angeordnet sind, insbesondere um einen relativ zur nächst benachbarten Schnittebene jeweils gleichgroßen Betrag.

3. System nach Anspruch 1,
**dadurch gekennzeichnet, dass**
sekundärseitig eine Ebene für den Schluss des magnetischen Kreises verwendet wird.

4. System nach Anspruch 1,
**dadurch gekennzeichnet, dass**
ein Spulenkern an der primärseitigen Wicklung vorgesehen ist, dessen Schnittgebilde in jeder Schnittebene, die die Drehachse enthält, U-förmig oder C-förmig um den Wicklungsbereich der primärseitigen Wicklung herum ausgeprägt ist.

5. System nach mindestens einem der vorangegangenen Ansprüche,
**dadurch gekennzeichnet, dass**
der Spulenkern aus mehreren U-förmigen oder C-förmigen Teilen zusammengesetzt ist, die am Umfang der Wicklung angeordnet sind und deren Schenkel in einer Richtung orientiert sind, die parallel zur Drehachse orientiert ist.

6. System nach mindestens einem der vorangegangenen Ansprüche,
**dadurch gekennzeichnet, dass**
der Spulenkern an der primärseitigen Wicklung als topfförmig vorgesehen ist, wobei die Öffnung des Topfes zur sekundärseitigen Wicklung hin vorgesehen ist.

7. System nach mindestens einem der vorangegangenen Ansprüche,
**dadurch gekennzeichnet, dass**
der Spulenkern an der sekundärseitigen und/oder primärseitigen Wicklung aus gleichartigen ausgeformten Teilen zusammengesetzt ist, insbesondere aus einer Vielzahl hiervon.

8. System nach mindestens einem der vorangegangenen Ansprüche,
**dadurch gekennzeichnet, dass**
ein Spulenkern an der sekundärseitigen Wicklung vorgesehen ist, der eben ausgebildet ist.

9. System nach mindestens einem der vorangegangenen Ansprüche,
**dadurch gekennzeichnet, dass**
der Spulenkern an der sekundärseitigen Wicklung vorgesehen ist.

10. System zur berührungslosen Energieübertragung,
das eine primärseitige und sekundärseitige, relativ zur primärseitigen Wicklung drehbar vorgesehene Wicklung umfasst,
**dadurch gekennzeichnet, dass**
die primärseitige Wicklung mit einer mittelfrequenten Spannung versorgt ist,
sekundärseitig ein Parallelschwingkreis vorgesehen ist,
**der Parallelschwingkreis als Filter für die an der sekundärseitigen Wicklung erzeugte Sekundärspannung vorgesehen ist,**
**die Resonanzfrequenz des Parallelschwingkreises auf die Mittelfrequenz abgestimmt ist, und**
**zur Datenübertragung zwischen primärem und sekundärem Teil ein Leckwellenleiter, insbesondere geschlitztes Koaxialkabel, vorgesehen ist.**

11. System nach Anspruch 10
**dadurch gekennzeichnet, dass**
der sekundärseitigen Wicklung der Parallelschwingkreis parallel beschaltet ist, insbesondere zur Verminderung der Empfindlichkeit gegen Schwankungen des Wertes des Luftspaltes zwischen Primär- und Sekundärteil.

12. System nach mindestens einem der vorangegangenen Ansprüche 10-11,
**dadurch gekennzeichnet, dass**
dem Parallelschwingkreis ein Gleichrichter nachgeschaltet ist, insbesondere zur Erzeugung von Zwischenkreisspannung für einen Umrichter.

13. System nach mindestens einem der vorangegangenen Ansprüche 10-12,
**dadurch gekennzeichnet, dass**
die mittelfrequente, die primärseitige Wicklung versorgende Spannung rechteckförmig verläuft, also eine mittelfrequente Rechteckspannung ist.

## Claims

1. A system for contact-free energy transmission,
comprising a primary-side and secondary-side winding which to be rotatable relative to the primary-side winding,
**characterised in that**
a coil core is provided and formed on the primary-side winding, **in that** the intersection formation thereof in at least one section plane which contains the axis of rotation is in a U-shape or C-shape around the winding region of the primary-side winding,
a coil core being provided on the secondary-side winding, which core is composed of cuboids which are arranged in a plane, the normal direction of which runs parallel to the direction of the axis of rotation.

2. A system according to Claim 1,
**characterised in that**
a plurality of such section planes exist which are arranged relative to each other turned about the axis of rotation by an amount of angle of rotation, in particular by an amount which is of the same size in each case relative to the next-adjacent section plane.

3. A system according to Claim 1,
**characterised in that**
on the secondary side a plane for closing the magnetic circuit is used.

4. A system according to Claim 1,
**characterised in that**
a coil core is provided on the primary-side winding, the section formation of which in each section plane which contains the axis of rotation is in a U-shape or C-shape around the winding region of the primary-side winding.

5. A system according to at least one of the preceding claims,
**characterised in that**
the coil core is composed of a plurality of U-shaped or C-shaped parts which are arranged on the periphery of the winding and the arms of which are oriented in a direction which is oriented parallel to the axis of rotation.

6. A system according to at least one of the preceding claims,
**characterised in that**
the coil core on the primary-side winding is provided as pot-shaped, with the opening of the pot being provided towards the secondary-side winding.

7. A system according to at least one of the preceding claims,
**characterised in that**
the coil core on the secondary-side and/or primary-side winding is composed of formed parts of the same kind, in particular of a large number thereof.

8. A system according to at least one of the preceding claims,
**characterised in that**
a coil core is provided on the secondary-side winding, which core is formed flat.

9. A system according to at least one of the preceding claims,
**characterised in that**
the coil core is provided on the secondary-side winding.

10. A system for contact-free energy transmission,
which comprises a primary-side and secondary-side winding provided to be rotatable relative to the primary-side winding,
**characterised in that**
the primary-side winding is supplied with a medium-frequency voltage,
a parallel resonant circuit is provided on the secondary side,
the parallel resonant circuit is provided as a filter for the secondary voltage generated at the secondary-side winding,
the resonant frequency of the parallel resonant circuit is matched to the medium frequency, and
a leaky wave conductor, in particular slotted coaxial cable, is provided for data transmission between the primary and secondary parts.

11. A system according to Claim 10,
**characterised in that**
the secondary-side winding and the parallel resonant circuit are connected in parallel, in particular in order to reduce the sensitivity to fluctuations in the value of the air gap between the primary and secondary parts.

12. A system according to at least one of the preceding Claims 10 - 11,
**characterised in that**
the parallel resonant circuit is followed by a rectifier, in particular for generating a DC link voltage for a converter.

13. A system according to at least one of the preceding Claims 10 - 12, **characterised in that**
the medium-frequency voltage which supplies the primary-side winding has a rectangular pattern, i.e. is a medium-frequency square-wave voltage.

## Revendications

1. Système de transmission d'énergie sans contact,
comprenant un enroulement primaire et un enroulement secondaire prévu rotatif par rapport à l'enroulement primaire,
**caractérisé en ce**
**qu'**un noyau de bobine est prévu et formé sur l'enroulement primaire, dont la structure en coupe dans au moins un plan de coupe qui contient l'axe de rotation est en forme de U ou de C autour de la zone d'enroulement de l'enroulement primaire,
un noyau de bobine étant prévu sur l'enroulement secondaire, qui se compose de parallélépipèdes qui sont disposés dans un plan dont la direction normale est parallèle à la direction de l'axe de rotation.

2. Système selon la revendication 1,
**caractérisé en ce**
**qu'**il existe plusieurs plans de coupe de ce type, qui sont disposés décalés les uns par rapport aux autres d'une valeur angulaire de rotation autour de l'axe de rotation, en particulier d'une valeur chaque fois égale par rapport au plan de coupe immédiatement voisin.

3. Système selon la revendication 1,
**caractérisé en ce**
**que**, du côté secondaire, un plan est utilisé pour la fermeture du circuit magnétique.

4. Système selon la revendication 1,
**caractérisé en ce**
**qu'**un noyau de bobine est prévu sur l'enroulement primaire, dont la structure en coupe dans chaque plan de coupe qui contient l'axe de rotation est en forme de U ou de C autour de la zone d'enroulement de l'enroulement primaire.

5. Système selon au moins l'une des revendications précédentes,
**caractérisé en ce**
**que** le noyau de bobine est composé de plusieurs pièces en forme de U ou de C qui sont disposées à la périphérie de l'enroulement et dont les branches sont orientées dans une direction qui est parallèle à l'axe de rotation.

6. Système selon au moins l'une des revendications précédentes,
**caractérisé en ce**
**que** le noyau de bobine sur l'enroulement primaire est prévu en forme de pot, l'ouverture du pot étant prévue vers l'enroulement secondaire.

7. Système selon au moins l'une des revendications précédentes,
**caractérisé en ce**
**que** le noyau de bobine sur l'enroulement secondaire et/ou primaire est composé de pièces formées du même type, en particulier d'une pluralité de celles-ci.

8. Système selon au moins l'une des revendications précédentes,
**caractérisé en ce**
**qu'**un noyau de bobine de forme plane est prévu sur l'enroulement secondaire.

9. Système selon au moins l'une des revendications précédentes,
**caractérisé en ce**
**que** le noyau de bobine est prévu sur l'enroulement secondaire.

10. Système de transmission d'énergie sans contact,
qui comprend un enroulement primaire et un enroulement secondaire prévu rotatif par rapport à l'enroulement primaire,
**caractérisé en ce**
**que** l'enroulement primaire est alimenté en tension à moyenne fréquence,
**qu'**un circuit oscillant parallèle est prévu côté secondaire,
**que** le circuit oscillant parallèle est prévu comme filtre pour la tension secondaire produite à l'enroulement secondaire,
**que** la fréquence de résonance du circuit oscillant parallèle est accordée sur la moyenne fréquence, et
**qu'**un guide d'ondes à fuites, en particulier un câble coaxial fendu, est prévu pour la transmission de données entre partie primaire et secondaire.

11. Système selon la revendication 10,
**caractérisé en ce**
**que** le circuit oscillant parallèle est câblé en parallèle sur l'enroulement secondaire, en particulier pour diminuer la sensibilité aux fluctuations de la valeur de l'espace d'air entre partie primaire et secondaire.

12. Système selon au moins l'une des revendications précédentes 10 à 11,
**caractérisé en ce**
**qu'**un redresseur est branché en aval du circuit oscillant parallèle, en particulier pour produire une tension de circuit intermédiaire pour un variateur.

13. Système selon au moins l'une des revendications précédentes 10 à 12,
**caractérisé en ce**
**que** la tension à moyenne fréquence qui alimente l'enroulement primaire est de forme rectangulaire, donc est une tension rectangulaire à moyenne fréquence.
